# EUROPEAN PATENT SPECIFICATION

(11) **EP 4 569 525 B1**
(45) Date of publication and mention of the grant of the patent: **15.04.2026**
(21) Application number: 22765762.4
(22) Date of filing: 10.08.2022
(51) Int. Cl.: H01C 7/12, H02H 9/04, H01T 4/04

(54) **HYBRID VOLTAGE LIMITER COMPRISING TRIGGER ELECTRONIC, THYRISTOR COMPONENT AND A VARISTOR**
HYBRIDER SPANNUNGSBEGRENZER MIT TRIGGERELEKTRONIK, THYRISTORBAUELEMENT UND VARISTOR
LIMITEUR DE TENSION HYBRIDE COMPRENANT UNE ÉLECTRONIQUE DE DÉCLENCHEMENT, UN COMPOSANT THYRISTOR ET UNE VARISTANCE

(43) Date of publication of application: 18.06.2025
(73) Proprietor: Hitachi Energy Ltd, 8050 Zürich (CH)
(72) Inventor: JOSEPHSOHN, Julian, 8152 Zürich (CH)
(74) Representative: Michalski Hüttermann & Partner Patentanwälte mbB
(86) International application number: PCT/EP2022/072489
(87) International publication number: WO 2024/032887

(56) References cited:
- EP-A1- 3 340 411
- CN-Y- 2 238 500
- DE-A1- 102005 040 432
- JP-A- S49 129 853
- US-A1- 2021 288 636

## Description

### Technical field

The invention relates to a hybrid voltage limiter comprising a first electrode, a second electrode, trigger electronics, a thyristor component and a varistor component which comprises a varistor and which is connected in parallel with the thyristor component, wherein the thyristor component is galvanically connected to the first electrode, the thyristor component is formed with two thyristors connected in antiparallel, the gates of the antiparallel-connected thyristors are connected to the trigger electronics in such a way that a trigger signal of the trigger electronics can be received, wherein the trigger electronics are galvanically connected to the first electrode and the second electrode, the thyristor component is galvanically connected to the second electrode, the thyristor component is galvanically connected to the second electrode, and the varistor component is galvanically connected to the first electrode and the second electrode.

### Background art

Hybrid voltage limiters consist of a parallel connection of a metal-oxide varistor and two anti-parallel connected thyristors. The metal-oxide varistor limits transient overvoltages caused by lightning and switching operations in the network. If overvoltages occur for a longer period of time (milliseconds up to hours) as a result of faults in the network or for operational reasons, the thyristors ignite and thus limit the transient voltages. As soon as a current zero crossing occurs, the thyristors extinguish the current flow and the original state is restored. As soon as the current is zero the thyristors cancel the current flow and the original state is restored. Typically, the varistor circuit and the thyristor circuit are assembled one on top of the other and they are insulated with a composite material plate and connected to the electrodes with bolts. This means that all the current flowing through each parallel circuit is then flowing through each set of bolts. The problem is that when the current is too high, a dielectric breakdown due to the small distances between the bolts and the electrode may occur. Usually, this results in an instantaneous meltdown of the bolt and electrode. Document EP3340411A1 discloses a circuit protection device that can be used to dissipate transient voltages with varistors.

### Summary of invention

It is therefore the object of the invention to provide a hybrid voltage limiter which shows improved operability.

The object of the invention is solved by the subject matter of claim 1. Preferred implementations are detailed in the dependent claims.

Thus, the object is solved by a hybrid voltage limiter comprising a first electrode, a second electrode, trigger electronics, a thyristor component and a varistor component which comprises a varistor and which is connected in parallel with the thyristor component, wherein the thyristor component is galvanically connected to the first electrode, the thyristor component is formed with two thyristors connected in anti-parallel, the gates of the antiparallel-connected thyristors are connected to the trigger electronics in such a way that a trigger signal of the trigger electronics can be received, wherein the trigger electronics are galvanically connected to the first electrode and the second electrode, the thyristor component is galvanically connected to the second electrode via a first resistivity, the thyristor component is galvanically connected to the second electrode by a bypass having a second resistivity, the first resistivity has a higher resistance value than the second resistivity, and the bypass is connected to the second electrode in such a way that a spark gap is avoided and the varistor component is galvanically connected to the first electrode and the second electrode.

Therefore, according to the invention, the second resistivity has a lower resistivity value than the first resistivity. This indirectly sets the path for the bulk of the power to be collected by the thyristor component. The current flows preferentially along the lowest resistance to the second electrode. Further, by avoiding spark gaps between the bypass and the second electrode, the possibility of a dielectric breakdown due to material having a lower dielectric constant is avoided. The spark gap is the space between two conductive surfaces that can be overcome at a sufficiently high voltage so that discharge can take place.

In general, the bypass can be designed in different ways. According to a preferred embodiment of the invention, however, it is provided that the bypass has a first contact surface and a second contact surface, the second surface being located on a side opposite the first contact surface, wherein an edge of the first contact surface is galvanically connected via a connection to an edge of the second contact surface. This makes it possible to integrate the bypass into the hybrid voltage limiter without negatively affecting the design and at the same time allowing a high current flow.

According to a preferred embodiment of the invention, it is provided that the second contact surface of the bypass is circular and the connection of the two contact surfaces has a width corresponding to the diameter of the second contact surface. The width of the connecting piece, which corresponds to the diameter of the second contact surface, prevents the formation of edges and corners on the bypass and thus reduces the edges and corners and by that the surface that would be suitable for a spark gap. The same applies to the circular shape of the second contact surface, which ensures a constant distance to other conductors.

In accordance with a preferred embodiment of the invention, it is provided that the bypass has a curved shape that is C-shaped in cross-section and the first contact surface corresponds to the lower part of the shape, the connection corresponds to the middle part and the second contact surface corresponds to the upper part. This allows the varistor component to be accommodated in the open arc of the C-shape, thus ensuring a compact and robust structure.

Pursuant to a preferred embodiment of the invention, it is provided that the thickness of the bypass is constant along its length. The constant thickness of the bypass ensures a constant resistance in the bypass and reduces the surface area that could otherwise be susceptible to a spark gap.

It is possible that the bypass is made of different materials and material compositions as long as the resistivity of the material has a lower value than that of the first resistivity. According to a preferred embodiment of the invention, however, it is provided that the bypass consists out of aluminum. The aluminum has a lower resistivity than the first resistivity and thus conducts the current better to the electrode, preventing dielectric breakdown.

According to a preferred embodiment of the invention, it is provided that the bypass consists out of copper. The copper has a lower resistivity than the first resistivity and therefore conducts the current better to the electrode, preventing dielectric breakdown.

In accordance with a preferred further development of the invention, it is provided that an angle of 90° is formed between the first contact surface and the connection and an angle of 94° is formed between the second contact surface and the connection. Due to the slightly enlarged angle between the second contact surface and the connection, there is a larger space to accommodate the varistor plate.

In principle, the hybrid voltage limiter can be designed in several ways. According to a preferred embodiment of the invention, however, it is provided that the first electrode is located on a side opposite to the second electrode, and the thyristor component is located between the first electrode and the second electrode, wherein the thyristor component is in galvanically connective contact with the first electrode, wherein the thyristor component further comprises a thyristor plate arranged on the side facing the second electrode at the first contact surface of the bypass and an isolation plate and the varistor component are arranged between the first and the second contact surface of the bypass, the varistor component further comprises a varistor plate facing the isolation plate and the first contact surface, the varistor is arranged on the side of the second contact surface facing the first contact surface, the side of the second contact surface of the bypass facing the second electrode is arranged on the second electrode, the varistor plate is connected to the first electrode by attachment means, the thyristor plate is connected to the second electrode by attachment means, and the attachment means have the first resistivity. Placing the individual components in this way ensures a compact design that also minimizes the risk of dielectric breakdown at the contacting point between the electrode and the thyristors' circuit attachment means.

In general, the thyristor plate and the varistor plate can be attached to the electrodes in different ways. According to a preferred embodiment of the invention, however, it is provided that the attachment means are screws and the side of the second electrode facing the first electrode has sockets with internal threads for receiving the screws, which are applied to the surface of the second electrode, so that the second electrode has no holes facing the first electrode. By not having any holes or interfaces interrupting the surface of the second electrode opposite the first electrode, no space is revealed for a spark gap that could lead to dielectric breakdown if attachment means were placed in the second electrode.

According to a preferred embodiment of the invention, it is provided that the first contact surface of the bypass has a triangular shape, wherein the first contact surface has a larger area than the second contact surface, and the two corners of the triangular contact surface facing away from the connection each have a through hole.

It is possible, that the bypass is inserted into the hybrid voltage limiter in various ways. According to a preferred embodiment of the invention, however, it is provided that the through holes in the corners of the first contact surface of the bypass receive the screws that connect the thyristor plate to the second electrode.

In principle, different varistor types may be used for the invention. According to a preferred embodiment of the invention, however, it is provided that the varistor is a metal oxide varistor. Metal oxide varistors exhibit almost absolute absence of current up to a certain potential difference.

In general, the trigger electronics can be located in different places. According to a preferred embodiment of the invention, however, it is provided that the first contact surface of the bypass has a centrally located through hole and the isolation plate has a centrally located through hole, a varistor plate recess is formed in the side of the varistor plate facing the second electrode, the trigger electronics are arranged in the varistor plate recess of the varistor plate, a through-thyristor-plate-recess is formed in the thyristor plate and the trigger electronics are connected to the thyristors through the thyristor plate by means of the through-thyristor-plate-recess. This allows the trigger electronics to be placed between the thyristor plate and the varistor plate.

It is possible that the space between the electrodes is filled with different materials. According to a preferred embodiment of the invention, however, it is provided that the space formed between the first electrode and the second electrode is filled with silicone. Filling the space between the two electrodes with silicone improves the resistance of the component to external influences such as vibrations, temperature fluctuations and changes in humidity.

According to a preferred embodiment of the invention, it is provided that the space formed between the first electrode and the second electrode is filled with epoxy resin.

Further implementations and advantages of the method are directly and unambiguously derived by the person skilled in the art from the system as described before.

### Brief description of drawings

These and other aspects of the invention will be apparent from and elucidated with reference to the implementations described hereinafter.

In the drawings:
Fig. 1 shows a schematic side view of the hybrid voltage limiter according to a preferred embodiment of the invention,
Fig. 2 shows a schematic cross-sectional view of the hybrid voltage limiter according to a preferred embodiment of the invention and
Fig. 3 shows a schematic view of the bypass of the hybrid voltage limiter according to a preferred embodiment of the invention.

### Description of implementations

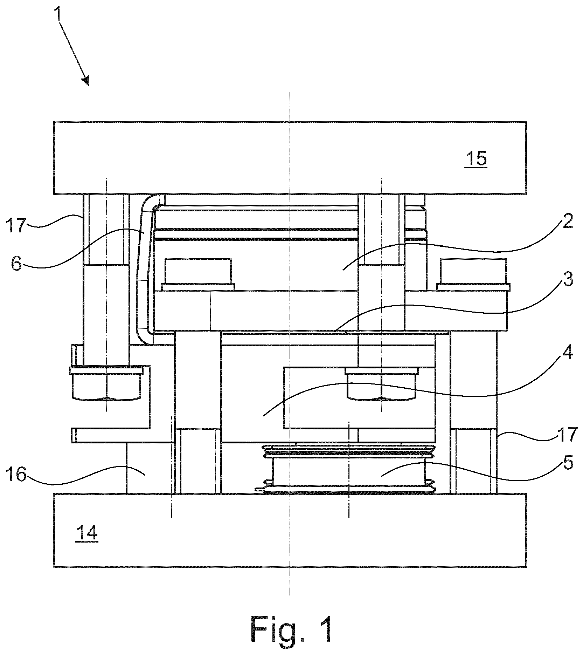

Fig. 1 shows a schematic side view of a hybrid voltage limiter 1. The hybrid voltage limiter 1 is cylindrical and a first electrode 14 and a second electrode 15 form the boundaries along the central axis of the cylindrical hybrid voltage limiter 1. The central axis of the hybrid voltage limiter 1 is perpendicular to the first electrode 14 and the second electrode 15. The individual electrodes are also cylindrical and have contacting options on the opposite sides facing away from each other, which are not shown in the figures. Antiparallel connected thyristors 5 are anchored in the first electrode 14 via pins, which are also not shown in the figures, and are conductively connected to it. A thyristor plate 4 is placed on the thyristors 5, which, analogous to the first electrode 14, is also designed with holes for receiving pins from the thyristors 5. The thyristors 5 and the thyristor plate 4 form a thyristor component. The thyristor plate 4 is connected to the first electrode 14 via an isolation piece 16 surrounding the thyristors 5 on its outer side. The thyristor plate 4 has holes for receiving screws 13 which connect the thyristor plate 4 to the second electrode 15. This connection is ensured by the sockets 17 placed on the second electrode 15, which are correspondingly provided with an internal thread for receiving the screws 13, whereby no hole with an internal thread is required on the side of the second electrode 15 facing the first electrode 14 for fastening.

A bypass 6 is galvanically connected with a first contact surface 18 resting on the thyristor plate 4. The first contact surface 18 of the bypass 6 has through holes 24 for receiving the screws 13, so that the bypass 6 is also firmly connected to the thyristor plate 4. An isolation plate 3 is attached to the side of the first contact surface 18 of the bypass 6 facing the second electrode 15. A varistor plate 2 is placed on the isolation plate 3, which also has holes for receiving screws 13. The screws 13 thus serve, in a manner analogous to the thyristor plate 4 and the second electrode 15, to connect the varistor plate 2 to this first electrode 14 via internally threaded sockets 17, which are attached to the first electrode 14.

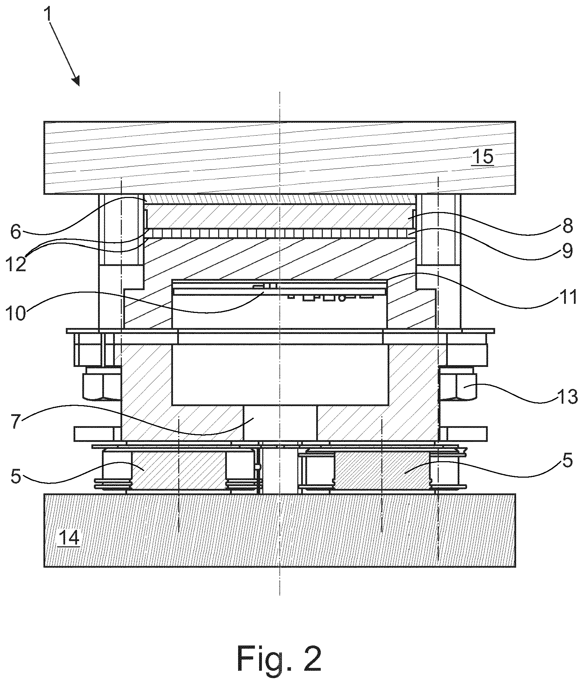

Fig. 2 schematically shows a sectional view of the hybrid voltage limiter 1. It can be seen here that the bypass 6 encloses the varistor component consisting of a varistor 9 and the varistor plate 2. The bypass 6 also encloses contact washers 12, the isolation plate 3 and a spacer 8. The varistor component is galvanically connected to a second contact surface 19 of the bypass 6 via the contact washers 12 and the spacer 8. The second contact surface 19 is in turn galvanically connected to the second electrode 15. Both the varistor plate 2 and the thyristor plate 4 have internal recesses for accommodating trigger electronics 10. The first contact surface 18 of the bypass 6 has a centrally located through hole 23. The isolation plate 3 also has a centrally arranged through hole. The trigger electronics 10 are galvanically isolated from the varistor plate 2 via a disc of mica 11. The trigger electronics 10 is connected through cables (not shown) to the gate and cathode of each thyristor 5. The cables are fed through a centrally located through-thyristor-plate-recess 7 in the recess of the thyristor plate 4.

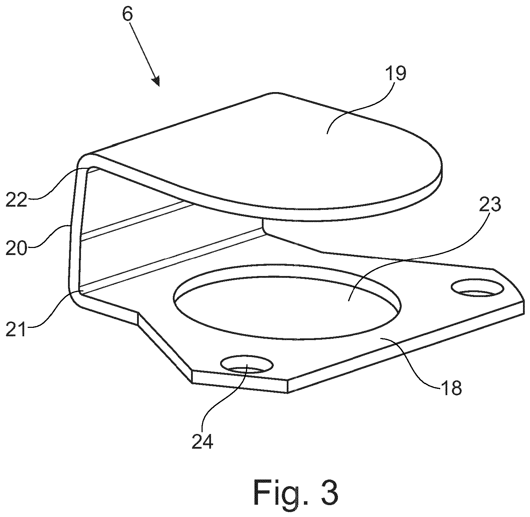

Finally, in Fig. 3, the bypass 6 of the hybrid voltage limiter 1 is shown. The bypass 6 has a C-shaped cross-section so that the isolation plate 3, the varistor plate 2, the contact washer 12, the varistor 9, and the second contact washer 12 as well as the spacer 8 are enclosed by the first contact area 18 and the second contact area 19. The first contact surface 18 and the second contact surface 19 are galvanically connected via a connection 20. The first contact surface 18 and the connection 20 form an angle of 90° 21. The second contact surface 19 and the connection 20 form an angle of 94° 22. The first contact surface 18 of the bypass 6 has a basically triangular shape. The corner facing the connection 20 is cut off. The two corners of the bypass 6 opposite the connection 20 have the through holes 24 for receiving the screws 13. The second contact surface 19 of the bypass 6 is circular on the side facing away from the connection 20. On the side facing the connection 20, from the center of the circular second contact surface 19, there is a continuous connection to the connection 20 with the width of the diameter of the second contact surface 19. This width is maintained over the entire connection 20 between the first contact surface 18 and the second contact surface 19.

Starting from the first electrode 14, a current can flow via the thyristors 5 and the thyristor plate 4 to the first contact surface 18 of the bypass 6. At the same time, a current can flow from the first electrode 14 via the screws 13 towards the varistor plate 2, the trigger electronics 10 and the varistor 9. Starting from the second electrode 15, a current can flow via the second contact surface 19 of the bypass 6 to the varistor 9, the varistor plate 2 and the trigger electronics 10. Likewise, a current can flow from the second electrode 15 via the screws 13 to the thyristor plate 4. At the same time, however, a current can flow from the second electrode 15 via the second contact surface 19, the connection 20 and the first contact surface 18 to the thyristor plate 4. Due to the lower resistivity of the aluminum bypass 6 and the flat contacting at the thyristor plate 4 and the second electrode 15, the current will always prefer this direction of flow to that through the screws 13 to the thyristor plate 4.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: hybrid voltage limiter
- 2: varistor plate
- 3: isolation plate
- 4: thyristor plate
- 5: thyristors
- 6: bypass
- 7: through-thyristor-plate-recess
- 8: spacer
- 9: varistor
- 10: trigger electronics
- 11: disc of mica
- 12: contact washers
- 13: screw
- 14: first electrode
- 15: second electrode
- 16: isolation piece
- 17: sockets
- 18: first contact surface
- 19: second contact surface
- 20: connection
- 21: angle of 90°
- 22: angle of 94°
- 23: centrally located through hole
- 24: through hole

## Claims

1. Hybrid voltage limiter (1) comprising a first electrode (14), a second electrode (15), trigger electronics (10), a thyristor component and a varistor component which comprises a varistor (9) and which is connected in parallel with the thyristor component, wherein
the thyristor component is galvanically connected to the first electrode (14),
the thyristor component is formed with two thyristors (5) connected in anti-parallel,
the gates of the antiparallel-connected thyristors (5) are connected to the trigger electronics (10) in such a way that a trigger signal of the trigger electronics (10) can be received, wherein
the trigger electronics (10) are galvanically connected to the first electrode (14) and the second electrode (15),
the thyristor component is galvanically connected to the second electrode (15) via a first resistivity,
the thyristor component is galvanically connected to the second electrode (15) by a bypass (6) having a second resistivity,
the first resistivity has a higher resistance value than the second resistivity, and
the bypass (6) is connected to the second electrode (15) in such a way that a spark gap is avoided and
the varistor component is galvanically connected to the first electrode (14) and the second electrode (15).

2. Hybrid voltage limiter (1) according to claim 1, wherein the bypass (6) has a first contact surface (18) and a second contact surface (19), the second surface being located on a side opposite the first contact surface (18), wherein an edge of the first contact surface (18) is galvanically connected via a connection (20) to an edge of the second contact surface (19).

3. Hybrid voltage limiter (1) according to the previous claim, wherein the second contact surface (19) of the bypass (6) is circular and the connection (20) of the two contact surfaces has a width corresponding to the diameter of the second contact surface (19).

4. Hybrid voltage limiter (1) according to any of the claims 2 or 3, wherein the bypass (6) has a curved shape that is C-shaped in cross-section and the first contact surface (18) corresponds to the lower part of the shape, the connection (20) corresponds to the middle part and the second contact surface (19) corresponds to the upper part.

5. Hybrid voltage limiter (1) according to any of the claims 2 to 4, wherein an angle of 90° (21) is formed between the first contact surface (18) and the connection (20) and an angle of 94° (22) is formed between the second contact surface (19) and the connection (20).

6. Hybrid voltage limiter (1) according to any of the preceding claims, wherein the thickness of the bypass (6) is constant along its length.

7. Hybrid voltage limiter (1) according to any of the preceding claims, wherein the bypass (6) consists out of aluminum.

8. Hybrid voltage limiter (1) according to according to claims 1 to 6, wherein the bypass (6) consists out of copper.

9. Hybrid voltage limiter (1) according to any of the claims 2 to 8, wherein the first electrode (14) is located on a side opposite to the second electrode (15), and
the thyristor component is located between the first electrode (14) and the second electrode (15), wherein
the thyristor component is in galvanically connective contact with the first electrode (14), wherein
the thyristor component further comprises a thyristor plate (4) arranged on the side facing the second electrode (15) at the first contact surface (18) of the bypass (6) and
an isolation plate (3) and the varistor component are arranged between the first and the second contact surface (19) of the bypass (6),
the varistor component further comprises a a varistor plate (2) facing the isolation plate (3) and the first contact surface (18),
the varistor (9) is arranged on the side of the second contact surface (19) facing the first contact surface (18),
the side of the second contact surface (19) of the bypass (6) facing the second electrode (15) is arranged on the second electrode (15),
the varistor plate (2) is connected to the first electrode (14) by attachment means,
the thyristor plate (4) is connected to the second electrode (15) by attachment means, and
the attachment means have the first resistivity.

10. Hybrid voltage limiter (1) according to claim 9, wherein the attachment means are screws (13) and the side of the second electrode (15) facing the first electrode (14) has sockets (17) with internal threads for receiving the screws (13), which are applied to the surface of the second electrode (15), so that the second electrode (15) has no holes facing the first electrode (14).

11. Hybrid voltage limiter (1) according to claim 10, wherein the first contact surface (18) of the bypass (6) has a triangular shape, wherein the first contact surface (18) has a larger area than the second contact surface (19), and the two corners of the triangular contact surface facing away from the connection (20) each have a through hole (24).

12. Hybrid voltage limiter (1) according to claim 11, wherein the through holes (24) in the corners of the first contact surface (18) of the bypass (6) receive the screws (13) that connect the thyristor plate (4) to the second electrode (15).

13. Hybrid voltage limiter (1) according to any of the preceding claims, where the varistor (9) is a metal oxide varistor.

14. Hybrid voltage limiter (1) according to any of the claims 2 to 13, wherein the first contact surface (18) of the bypass (6) has a centrally located through hole (23) and the isolation plate (3) has a centrally located through hole,
a varistor plate (2) recess is formed in the side of the varistor plate (2) facing the second electrode (15),
the trigger electronics (10) are arranged in the varistor plate (2) recess of the varistor plate (2),
a through-thyristor-plate-recess (7) is formed in the thyristor plate (4) and the trigger electronics (10) are connected to the thyristors (5) through the thyristor plate (4) by means of the through-thyristor-plate-recess (7).

15. Hybrid voltage limiter (1) according to any of the preceding claims, wherein the space formed between the first electrode (14) and the second electrode (15) is filled with silicone.

## Patentansprüche

1. Hybrider Spannungsbegrenzer (1), umfassend eine erste Elektrode (14), eine zweite Elektrode (15), Triggerelektroniken (10), ein Thyristorbauelement und ein Varistorbauelement, das einen Varistor (9) umfasst und das parallel zum Thyristorbauelement geschaltet ist, wobei
das Thyristorbauelement galvanisch mit der ersten Elektrode (14) verbunden ist,
das Thyristorbauelement aus zwei antiparallel geschalteten Thyristoren (5) gebildet ist,
die Gates der antiparallel geschalteten Thyristoren (5) mit den Triggerelektroniken (10) derart verbunden sind, dass ein Triggersignal der Triggerelektroniken (10) empfangen werden kann, wobei
die Triggerelektroniken (10) galvanisch mit der ersten Elektrode (14) und der zweiten Elektrode (15) verbunden sind,
das Thyristorbauelement über einen ersten spezifischen Widerstand galvanisch mit der zweiten Elektrode (15) verbunden ist,
das Thyristorbauelement durch einen Bypass (6) mit einem zweiten spezifischen Widerstand galvanisch mit der zweiten Elektrode (15) verbunden ist,
der erste spezifische Widerstand einen höheren Widerstandswert als der zweite spezifische Widerstand aufweist und
der Bypass (6) so mit der zweiten Elektrode (15) verbunden ist, dass eine Funkenstrecke vermieden wird, und
das Varistorbauelement galvanisch mit der ersten Elektrode (14) und der zweiten Elektrode (15) verbunden ist.

2. Hybrider Spannungsbegrenzer (1) nach Anspruch 1, wobei der Bypass (6) eine erste Kontaktfläche (18) und eine zweite Kontaktfläche (19) aufweist, wobei sich die zweite Fläche auf einer der ersten Kontaktfläche (18) gegenüberliegenden Seite befindet, wobei eine Kante der ersten Kontaktfläche (18) über eine Verbindung (20) mit einer Kante der zweiten Kontaktfläche (19) galvanisch verbunden ist.

3. Hybrider Spannungsbegrenzer (1) nach dem vorhergehenden Anspruch, wobei die zweite Kontaktfläche (19) des Bypasses (6) kreisförmig ist und die Verbindung (20) der beiden Kontaktflächen eine Breite aufweist, die dem Durchmesser der zweiten Kontaktfläche (19) entspricht.

4. Hybrider Spannungsbegrenzer (1) nach einem der Ansprüche 2 oder 3, wobei der Bypass (6) eine gekrümmte Form aufweist, die im Querschnitt C-förmig ist, und die erste Kontaktfläche (18) dem unteren Teil der Form entspricht, die Verbindung (20) dem mittleren Teil entspricht und die zweite Kontaktfläche (19) dem oberen Teil entspricht.

5. Hybrider Spannungsbegrenzer (1) nach einem der Ansprüche 2 bis 4, wobei zwischen der ersten Kontaktfläche (18) und der Verbindung (20) ein Winkel von 90° (21) und zwischen der zweiten Kontaktfläche (19) und der Verbindung (20) ein Winkel von 94° (22) gebildet ist.

6. Hybrider Spannungsbegrenzer (1) nach einem der vorangehenden Ansprüche, wobei die Dicke des Bypasses (6) entlang seiner Länge konstant ist.

7. Hybrider Spannungsbegrenzer (1) nach einem der vorangehenden Ansprüche, wobei der Bypass (6) aus Aluminium besteht.

8. Hybrider Spannungsbegrenzer (1) nach den Ansprüchen 1 bis 6, wobei der Bypass (6) aus Kupfer besteht.

9. Hybrider Spannungsbegrenzer (1) nach einem der Ansprüche 2 bis 8, wobei die erste Elektrode (14) auf einer der zweiten Elektrode (15) gegenüberliegenden Seite angeordnet ist, und
das Thyristorbauelement zwischen der ersten Elektrode (14) und der zweiten Elektrode (15) angeordnet ist, wobei
das Thyristorbauelement in galvanisch verbundenem Kontakt mit der ersten Elektrode (14) steht, wobei
das Thyriostorbauelement ferner eine Thyristorplatte (4) umfasst, die auf der der zweiten Elektrode (15) zugewandten Seite an der ersten Kontaktfläche (18) des Bypasses (6) angeordnet ist, und
eine Isolierplatte (3) und das Varistorbauelement zwischen der ersten und der zweiten Kontaktfläche (19) des Bypasses (6) angeordnet sind,
das Varistorbauelement ferner eine Varistorplatte (2) umfasst, die der Isolierplatte (3) und der ersten Kontaktfläche (18) zugewandt ist,
der Varistor (9) auf der Seite der zweiten Kontaktfläche (19) angeordnet ist, die der ersten Kontaktfläche (18) zugewandt ist,
die Seite der zweiten Kontaktfläche (19) des Bypasses (6), die der zweiten Elektrode (15) zugewandt ist, auf der zweiten Elektrode (15) angeordnet ist,
die Varistorplatte (2) über Befestigungsmittel mit der ersten Elektrode (14) verbunden ist,
die Thyristorplatte (4) über Befestigungsmittel mit der zweiten Elektrode (15) verbunden ist, und
die Befestigungsmittel den ersten spezifischen Widerstand aufweisen.

10. Hybrider Spannungsbegrenzer (1) nach Anspruch 9, wobei die Befestigungsmittel Schrauben (13) sind und die der ersten Elektrode zugewandte Seite der zweiten Elektrode (15) Buchsen (17) mit Innengewinde zur Aufnahme der Schrauben (13) aufweist, die an der Oberfläche der zweiten Elektrode (15) angebracht sind, so dass die zweite Elektrode keine der ersten Elektrode (14) zugewandten Löcher aufweist.

11. Hybrider Spannungsbegrenzer (1) nach Anspruch 10, wobei die erste Kontaktfläche (18) des Bypasses (6) eine dreieckige Form aufweist, wobei die erste Kontaktfläche (18) eine größere Fläche als die zweite Kontaktfläche (19) aufweist und die beiden von der Verbindung (20) abgewandten Ecken der dreieckigen Kontaktfläche jeweils ein Durchgangsloch (24) aufweisen.

12. Hybrider Spannungsbegrenzer (1) nach Anspruch 11, wobei die Durchgangslöcher (24) in den Ecken der ersten Kontaktfläche (18) des Bypasses (6) die Schrauben (13) aufnehmen, die die Thyristorplatte (4) mit der zweiten Elektrode (15) verbinden.

13. Hybrider Spannungsbegrenzer (1) nach einem der vorangehenden Ansprüche, wobei der Varistor (9) ein Metalloxid-Varistor ist.

14. Hybrider Spannungsbegrenzer (1) nach einem der Ansprüche 2 bis 13, wobei die erste Kontaktfläche (18) des Bypasses (6) ein mittig angeordnetes Durchgangsloch (23) aufweist und die Isolierplatte (3) ein mittig angeordnetes Durchgangsloch aufweist,
eine Aussparung der Varistorplatte (2) in der der zweiten Elektrode (15) zugewandten Seite der Varistorplatte (2) ausgebildet ist,
die Triggerelektroniken (10) in der Aussparung der Varistorplatte (2) der Varistorplatte (2) angeordnet sind,
in der Thyristorplatte (4) eine durch die Thyristorplatte hindurchgehende Aussparung (7) gebildet ist und die Triggerelektroniken (10) mittels der durch die Thyristorplatte hindurchgehenden Aussparung (7) durch die Thyristorplatte (4) mit den Thyristoren (5) verbunden sind.

15. Hybrider Spannungsbegrenzer (1) nach einem der vorangehenden Ansprüche, wobei der zwischen der ersten Elektrode (14) und der zweiten Elektrode (15) gebildete Raum mit Silikon gefüllt ist.

## Revendications

1. Limiteur de tension hybride (1) comprenant une première électrode (14), une seconde électrode (15), un circuit électronique de déclenchement (10), un composant thyristor et un composant varistance qui comprend une varistance (9) et qui est connecté en parallèle au composant thyristor, dans lequel
le composant thyristor est connecté de manière galvanique à la première électrode (14),
le composant thyristor est formé de deux thyristors (5) connectés de manière antiparallèle,
les portes des thyristors connectés de manière antiparallèle (5) sont connectées au circuit électronique de déclenchement (10) de telle façon qu'un signal de déclenchement du circuit électronique de déclenchement (10) peut être reçu, dans lequel
le circuit électronique de déclenchement (10) est connecté de manière galvanique à la première électrode (14) et à la seconde électrode (15),
le composant thyristor est connecté de manière galvanique à la seconde électrode (15) par l'intermédiaire d'une première résistivité,
le composant thyristor est connecté de manière galvanique à la seconde électrode (15) par une dérivation (6) ayant une seconde résistivité,
la première résistivité a une valeur de résistance supérieure à la seconde résistivité, et
la dérivation (6) est connectée à la seconde électrode (15) de telle façon qu'un écartement des électrodes est évité et
le composant varistance est connecté de manière galvanique à la première électrode (14) et à la seconde électrode (15).

2. Limiteur de tension hybride (1) selon la revendication 1, dans lequel la dérivation (6) a une première surface de contact (18) et une seconde surface de contact (19), la seconde surface étant située sur un côté opposé à la première surface de contact (18), dans lequel un bord de la première surface de contact (18) est connecté de manière galvanique par l'intermédiaire d'une connexion (20) à un bord de la seconde surface de contact (19).

3. Limiteur de tension hybride (1) selon la revendication précédente, dans lequel la seconde surface de contact (19) de la dérivation (6) est circulaire et la connexion (20) des deux surfaces de contact a une largeur correspondant au diamètre de la seconde surface de contact (19).

4. Limiteur de tension hybride (1) selon l'une quelconque des revendications 2 ou 3, dans lequel la dérivation (6) a une forme incurvée dont la section transversale est en forme de C et la première surface de contact (18) correspond à la partie inférieure de la forme, la connexion (20) correspond à la partie médiane et la seconde surface de contact (19) correspond à la partie supérieure.

5. Limiteur de tension hybride (1) selon l'une quelconque des revendications 2 à 4, dans lequel un angle de 90° (21) est formé entre la première surface de contact (18) et la connexion (20) et un angle de 94° (22) est formé entre la seconde surface de contact (19) et la connexion (20).

6. Limiteur de tension hybride (1) selon l'une quelconque des revendications précédentes, dans lequel l'épaisseur de la dérivation (6) est constante sur sa longueur.

7. Limiteur de tension hybride (1) selon l'une quelconque des revendications précédentes, dans lequel la dérivation (6) est constituée d'aluminium.

8. Limiteur de tension hybride (1) selon les revendications 1 à 6, dans lequel la dérivation (6) est constituée de cuivre.

9. Limiteur de tension hybride (1) selon l'une quelconque des revendications 2 à 8, dans lequel la première électrode (14) est située sur un côté opposé à la seconde électrode (15), et
le composant thyristor est situé entre la première électrode (14) et la seconde électrode (15), dans lequel
le composant thyristor est en contact de connexion galvanique avec la première électrode (14), dans lequel
le composant thyristor comprend en outre une plaque de thyristor (4) agencée sur le côté orienté vers la seconde électrode (15) au niveau de la première surface de contact (18) de la dérivation (6) et
une plaque d'isolation (3) et le composant varistance sont agencés entre la première et la seconde surface de contact (19) de la dérivation (6),
le composant varistance comprend en outre une plaque de varistance (2) faisant face à la plaque d'isolation (3) et à la première surface de contact (18),
la varistance (9) est agencée sur le côté de la seconde surface de contact (19) faisant face à la première surface de contact (18),
le côté de la seconde surface de contact (19) de la dérivation (6) faisant face à la seconde électrode (15) est agencé sur la seconde électrode (15),
la plaque de varistance (2) est connectée à la première électrode (14) par des moyens de fixation,
la plaque de thyristor (4) est connectée à la seconde électrode (15) par des moyens de fixation, et
les moyens de fixation ont la première résistivité.

10. Limiteur de tension hybride (1) selon la revendication 9, dans lequel les moyens de fixation sont des vis (13) et le côté de la seconde électrode (15) faisant face à la première électrode (14) a des cavités (17) avec des filetages internes pour recevoir les vis (13), qui sont appliquées à la surface de la seconde électrode (15), de telle sorte que la seconde électrode (15) n'a pas d'orifices faisant face à la première électrode (14).

11. Limiteur de tension hybride (1) selon la revendication 10, dans lequel la première surface de contact (18) de la dérivation (6) a une forme triangulaire, dans lequel la première surface de contact (18) a une aire supérieure à celle de la seconde surface de contact (19), et les deux coins de la surface de contact triangulaire orientée à l'opposé de la connexion (20) ont chacun un orifice traversant (24).

12. Limiteur de tension hybride (1) selon la revendication 11, dans lequel les orifices traversants (24) dans les coins de la première surface de contact (18) de la dérivation (6) accueillent les vis (13) qui relient la plaque de thyristor (4) à la seconde électrode (15).

13. Limiteur de tension hybride (1) selon l'une quelconque des revendications précédentes, dans lequel la varistance (9) est une varistance d'oxyde métallique.

14. Limiteur de tension hybride (1) selon l'une quelconque des revendications 2 à 13, dans lequel la première surface de contact (18) de la dérivation (6) a un orifice traversant situé de manière centrale (23) et la plaque d'isolation (3) a un orifice traversant situé de manière centrale,
un évidement de plaque de varistance (2) est formé sur le côté de la plaque de varistance (2) orienté vers la seconde électrode (15),
le circuit électronique de déclenchement (10) est agencé dans l'évidement de plaque de varistance (2) de la plaque de varistance (2),
un évidement traversant la plaque de thyristor (7) est formé dans la plaque de thyristor (4) et le circuit électronique de déclenchement (10) est connecté aux thyristors (5) à travers la plaque de thyristor (4) au moyen de l'évidement traversant la plaque de thyristor (7).

15. Limiteur de tension hybride (1) selon l'une quelconque des revendications précédentes, dans lequel l'espace formé entre la première électrode (14) et la seconde électrode (15) est rempli de silicone.
